# EUROPÄISCHE PATENTSCHRIFT

(11) **EP 2 735 925 B1**
(45) Veröffentlichungstag und Bekanntmachung des Hinweises auf die Patenterteilung: **17.08.2016**
(21) Anmeldenummer: 12194074.6
(22) Anmeldetag: 23.11.2012
(51) Int. Cl.: G05B 19/042

(54) **Automatisierungseinrichtung**
Automation device
Dispositif d'automatisation

(43) Veröffentlichungstag der Anmeldung: 28.05.2014
(73) Patentinhaber: Siemens Aktiengesellschaft, 80333 München (DE)
(72) Erfinder: Englert, Markus, 67105 Schifferstadt (DE)

(56) Entgegenhaltungen:
- EP-A1- 2 071 418
- DE-A1- 10 049 049
- DE-A1-102004 014 257
- DE-A1-102007 054 417
- DE-A1-102008 038 501

## Beschreibung

Die Erfindung betrifft eine Automatisierungseinrichtung mit einer Slave-Einheit und mit einem Master-Modul gemäß dem Oberbegriff des Patentanspruchs 1.

Eine derartige Automatisierungseinrichtung ist aus dem Siemens-Katalog ST PCS 7, Ausgabe Juni 2012, Kapitel 8 bekannt. Eine so genannte "Dezentrale Peripherie" ist für dezentrale Lösungen von Automatisierungsaufgaben im Bereich der Fertigungs-, der Prozess- sowie Verfahrenstechnik vorgesehen und umfasst gewöhnlich unterschiedliche, mit mehreren Slave-Modulen versehene Slave-Einheiten bzw. Peripheriegeräte, die jeweils mittels einem IM-Modul der Slave-Einheiten und über einen so genannten PROFIBUS DP mit einem Master-Modul verbunden sind. Dabei ist das Master-Modul gewöhnlich Bestandteil einer mit mindestens einem CPU- und weiteren Funktions-Modulen versehenen leistungsstarken speicherprogrammierbaren Steuerung zur Lösung komplexerer Automatisierungsaufgaben, wobei das CPU-Modul selbst dazu ausgebildet sein kann, die Aufgaben des Master-Moduls zu übernehmen.
An diese Slave-Module einer Slave-Einheit sind Aktoren und/oder Sensoren anschließbar, wobei von den Sensoren übermittelte Prozessperipherie-Eingangsdaten in den Slave-Modulen hinterlegbar sind und wobei den Aktoren von den Slave-Modulen Prozessperipherie-Ausgangsdaten zuführbar sind, welche die Master-Einheit den Slave-Modulen übermittelt.

Damit eine mit mehreren Slave-Modulen ausgebildete Slave-Einheit zur Lösung von Automatisierungsaufgaben eingesetzt werden kann, müssen die Slave-Module parametriert werden. Dazu übermittelt das Master-Modul dem IM-Modul der Slave-Einheiten über den Bus ein Telegramm mit einer Telegramm-Kennung (Datensatznummer), welche anzeigt, dass das Telegramm ein Parameter-Telegramm ist. Neben dieser Telegramm-Kennung weist das Telegramm Datenbereiche auf, welche die Adresse der zu adressierenden Slave-Einheit, die Steckplatzadressen bzw. die Slot-Nummern der Slave-Module in der Slave-Einheit, sowie Parameter zur Parametrierung der Slave-Module umfasst. Die Größe dieser Datenbereiche aller Slave-Module darf gewöhnlich 244 Byte nicht überschreiten, was bedeutet, dass die Anzahl der Slave-Module, die in einer Slave-Einheit betrieben bzw. eingesetzt werden können, beschränkt ist. Es kann beispielsweise vorkommen, dass für ein erstes und ein zweites Slave-Modul eines Herstellers bzw. Lieferanten jeweils ein Datenbereich von 50 Byte und für ein Slave-Modul eines weiteren Herstellers aufgrund der Vielzahl von einstellbaren Parametern ein Datenbereich von 150 Byte erforderlich ist. Dies bedeutet, dass diese drei Slave-Module nicht zusammen in einer Slave-Einheit eingesetzt werden können, weil die Telegrammlänge bezüglich des Datenbereichs von 244 Byte nicht überschritten werden kann.

DE 10 2008 038 501 A1 beschreibt ein Verfahren zum Bestimmen einer statischen Datenstruktur eines Feldgerätes. Es sind Maßnahmen vorgesehen, mittels welcher auf eine einfache Weise eine effektive Übertragungsrate zwischen einem Parametrierwerkzeug und einem Feldgerät erhöht werden kann.

Eine Automatisierungseinrichtung gemäß dem Oberbegriff des Anspruchs 1 ist aus der DE 100 49 049 A1 bekannt.

Der Erfindung liegt daher die Aufgabe zugrunde, eine Automatisierungseinrichtung der eingangs genannten Art zu schaffen, mittels welcher die Anzahl der einsetzbaren Slave-Module in einer Slave-Einheit erhöht werden kann.

Diese Aufgabe wird dadurch gelöst, dass in mindestens einem der Slave-Module mindestens ein Default-Parameter-Datensatz hinterlegt ist und dass für einen Zugriff auf den mindestens einen Default-Parameter-Datensatz ein Datensatz-Index vorgesehen ist, welcher in dem für das mindestens eine Slave-Modul vorgesehenen Datenbereich im Telegramm hinterlegt ist.

Vorteilhaft ist, dass die Größe des Datenbereichs des von dem Master-Modul der Slave-Einheit übermittelten Telegramms erheblich vermindert wird und die Parametrierung der Slave-Module - insbesondere im Rahmen eines Hochlaufs der Automatisierungseinrichtung - schneller bewerkstelligt werden kann.

Für den Fall, dass das Master-Modul der Slave-Einheit ein Telegramm übermittelt, erkennt das Interface-Modul dieser Slave-Einheit anhand der Datensatz-Nummer, dass das Telegramm ein Parameter-Telegramm ist und ferner anhand der Steckplatzadressen bzw. Slot-Nummern, auf welche Slave-Module im Hinblick auf deren Parametrierung zuzugreifen ist. Mittels des im Datenbereich des Telegramms hinterlegten Datensatz-Index greift das Slave-Modul zu dessen Parametrierung auf den in diesem Slave-Modul hinterlegten Default-Datensatz zu. Je nach Funktionsumfang bzw. Ausbaustufe eines Slave-Moduls kann dieses Slave-Modul mehrere Default-Datensätze aufweisen, wobei für jeden dieser Default-Datensätze jeweils ein Datensatz-Index vorgesehen ist.

Die Erfindung geht von der Idee aus, den ohnehin vorhandenen großen Speicher des Slave-Moduls oder der Slave-Module zu nutzen, um die störenden Auswirkungen der geringen Größe des Parameterdatenbereichs im Telegramm weitgehend zu vermeiden.

In einer Ausgestaltung der Erfindung werden vorgesehene bzw. beabsichtigte Änderungen von Parametern an dem mindestens einen Default-Parameter-Datensatz ebenfalls in dem für das mindestens eine Slave-Modul vorgesehenen Datenbereich des Telegramms hinterlegt. Für den Fall, dass ein Default-Parameter, z. B. die Baudrate, im Default-Parameter-Datensatz nicht übernommen und durch einen neuen Wert ersetzt werden soll, wird dies im Datenbereich im Telegramm mittels einer Byte- oder Bit-Kennung, welche dem Byte oder Bit im Default-Parameter-Datensatz entspricht, und der neuen Baudrate angezeigt. Die ursprünglich in diesem Byte- oder Bit im Default-Parameter-Datensatz hinterlegte Baudrate wird durch die neue Baudrate bezüglich der Parametrierung des Slave-Moduls ersetzt. Aufgrund derartiger Maßnahmen sind Änderungen an dem mindestens einen Default-Parameter-Datensatz leicht zu bewerkstelligen und es brauchen für eine Vielzahl von Parameterkonfigurationen keine weiteren Default-Parameter-Datensätze angelegt werden.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in vereinfachter Form:
- Figuren 1 und 3: ein Slave-Modul und,
- Figuren 2, 4 und 5: eine Automatisierungseinrichtung.

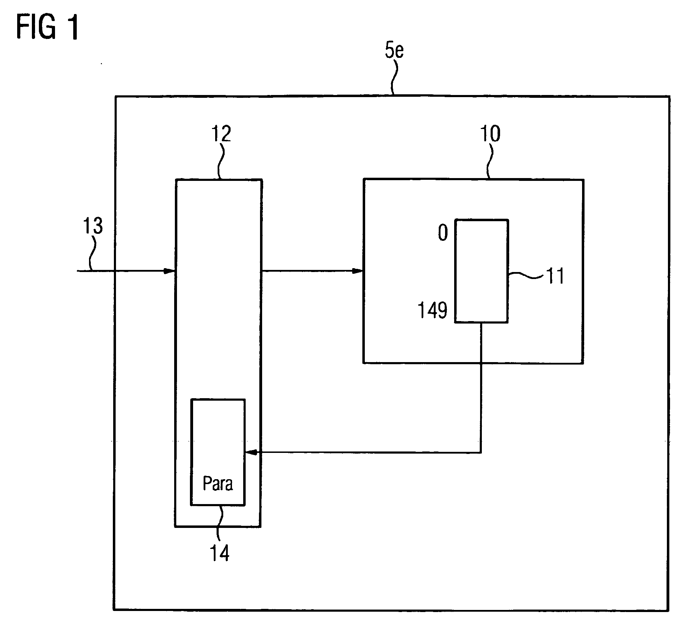

Die in den Figuren 1 bis 5 dargestellten gleichen Teile sind mit gleichen Bezugszeichen versehen.

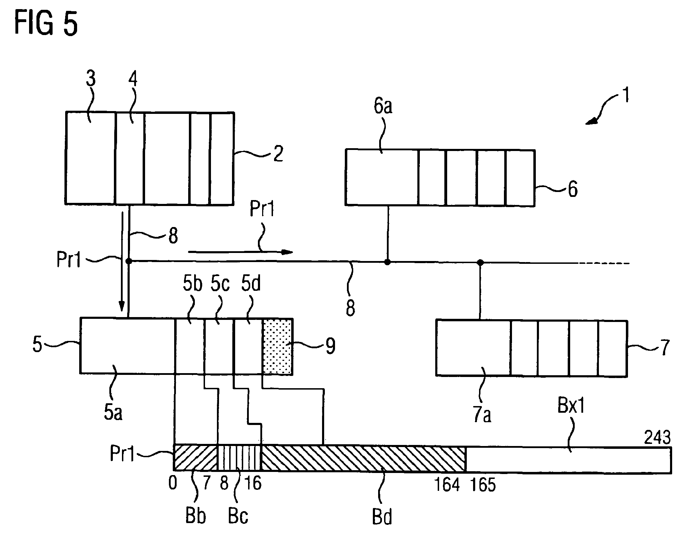

Es wird zunächst auf Figur 5 verwiesen, in welcher eine an sich bekannte Automatisierungseinrichtung 1 dargestellt ist. Bestandteile dieser Automatisierungseinrichtung 1 zur Steuerung eines technischen Prozesses sind eine speicherprogrammierbare Steuerung 2 mit einem CPU-Modul 3, ein Master-Modul 4 sowie drei Slave-Einheiten 5, 6, 7. Die Slave-Einheiten 5, 6, 7 weisen jeweils ein Interface-Modul 5a, 6a, 7a auf, über welche das Master-Modul 4 auf die Slave-Module der Slave-Einheiten 5, 6, 7 lesend und/oder schreibend zugreift. Selbstverständlich weist die speicherprogrammierbare Steuerung 2 weitere Module, z. B. mehrere Analog- und/oder Digitalein/- ausgabe-Module, Kommunikations-Module sowie weitere für den Betrieb der speicherprogrammierbaren Steuerung 2 und zur Steuerung des Prozesses geeignete Module auf. Darüber hinaus kann selbstverständlich das CPU-Modul 3 selbst dazu ausgebildet sein, die Aufgaben des Master-Moduls 4 zu übernehmen. Im vorliegenden Ausführungsbeispiel sind der Einfachheit halber lediglich Slave-Module 5b, 5c, 5d der Slave-Einheit 5 dargestellt. Um diese Module zu parametrieren, übermittelt das Master-Modul 4 über einen Bus 8 - z. B. ein so genannter PROFIBUS DP - dem Interface-Modul 5a dieser Slave-Einheit 5 ein Parameter-Telegramm Pr1. Dieses Telegramm Pr1 umfasst eine Datensatz-Nummer, welche den Slave-Einheiten 5, 6, 7 anzeigt, dass das Telegramm Pr1 ein Parameter-Telegramm ist. Ferner umfasst das Telegramm Pr1 eine Adresse zur Adressierung der Slave-Einheit 5 sowie den Slave-Modulen 5b, 5c, 5d zugeordnete Datenbereiche Bb, Bc, Bd. Diese Datenbereiche Bb, Bc, Bd sind jeweils mit einer Slot-Nummer bzw. einer Steckplatzadresse zur Adressierung des jeweiligen Slave-Moduls 5b, 5c, 5d versehen und weisen ferner Parameter zur Parametrierung des jeweiligen Slave-Moduls 5b, 5c, 5d auf. Im gezeigten Beispiel ist die Größe der Datenbereiche Bb, Bc im Telegramm Pr1 jeweils 8 Byte und die des Datenbereichs Bd dagegen 150 Byte, was darauf hinweist, dass für das Slave-Modul 5d im Vergleich zu den Slave-Modulen 5b, 5c erheblich mehr Parameter zur Parametrierung dieses Slave-Moduls 5d erforderlich sind.

Aufgrund dessen, dass im Telegramm Pr1 von der Maximallänge 244 Byte nur noch 79 Byte (Bereich Bx1) belegt werden können, kann in einen freien Steckplatz 9 der Slave-Einheit 5 ein weiteres Slave-Modul nur dann gesteckt werden kann, falls die Daten (Steckplatzadresse, Parameter) für dieses Slave-Modul diese 79 Byte nicht überschreiten.

Um zu ermöglichen, dass auch in diesem Fall in die Slave-Einheit 5 ein weiteres Slave-Modul in den freien Steckplatz 9 eingesetzt werden kann, für welches mehr als 79 Byte Daten erforderlich sind, sind Slave-Module vorgesehen, die derart ausgebildet sind, dass in einem Speicher derartiger Slave-Module ein Default-Parameter-Datensatz hinterlegt ist, auf den mittels eines Datensatz-Index zugegriffen werden kann. Dieser Index ist in dem für dieses Slave-Modul vorgesehenen Datenbereich des Telegramms hinterlegt, welches das Master-Modul dem Interface-Modul der jeweiligen Slave-Einheit übermittelt. Vorzugsweise sind solche Slave-Module wie beschrieben ausgebildet, für die eine Vielzahl von Parametern für deren Parametrierung erforderlich ist.

Figur 1 zeigt ein derartiges Slave-Modul 5e mit einem Speicher 10, in welchem ein Parameter aufweisender Default-Parameter-Datensatz 11 hinterlegt ist, wobei dieser eine Größe bzw. Länge von 150 Byte aufweist. Aufgrund eines einem Controller 12 des Slave-Moduls 5e zugeführten Datensatz-Index 13 wird der Default-Parameter-Datensatz 11 in einen Parameter-Speicher 14 des Controllers 12 geladen, wodurch das Slave-Modul 5e parametriert ist. Wie beschrieben ist der Datensatz-Index Bestandteil eines Parameter-Telegramms, welches das Master-Modul einer Slave-Einheit übermittelt.

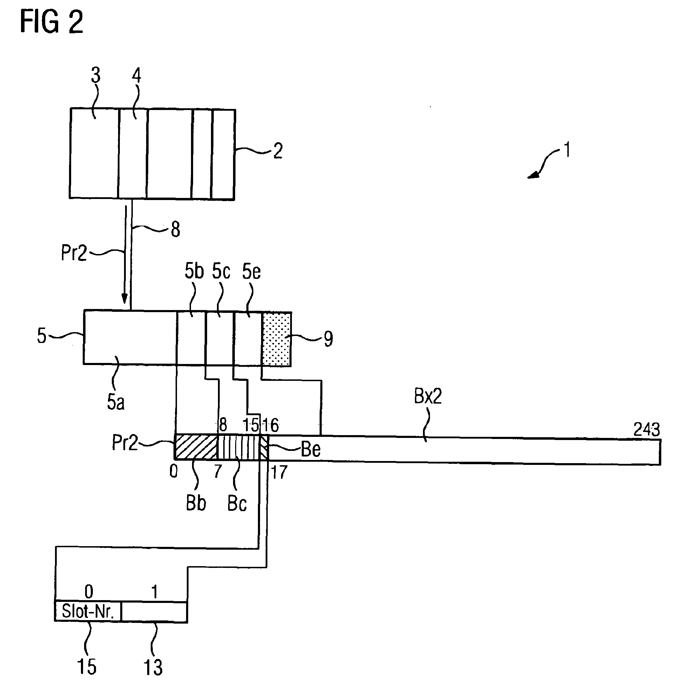

Zur näheren Erläuterung wird dazu auf Figur 2 verwiesen, in der zur besseren Übersicht die in Figur 5 beschriebene Automatisierungseinrichtung 1 ohne die Slave-Einheiten 6, 7 dargestellt ist. Anstatt mit dem Slave-Modul 5d (Figur 5) ist die Slave-Einheit 5 mit dem Slave-Modul 5e bestückt, wobei das Master-Modul 4 der Slave-Einheit 5 zur Parametrierung der Slave-Module 5b, 5c, 5e ein Parameter-Telegramm Pr2 zuführt. Im Unterschied zu dem Parameter-Telegramm Pr1 (Figur 5) weist dieses Parameter-Telegramm Pr2 anstatt des Datenbereichs Bd einen Datenbereich Be mit einer Länge von 2 Byte auf, in welchem lediglich der Datensatz-Index 13 und eine Slot-Nummer 15 bzw. eine Steckplatzadresse hinterlegt sind. Im vorliegenden Ausführungsbeispiel sind den Slave-Modulen 5b, 5c, 5e als Slot-Nummern 15 die Nummern "2, 3, 4" zugewiesen. Mittels dieser Slot-Nummer 15 adressiert - wie beschrieben - das Interface-Modul 5a das Slave-Modul 5e, und mittels des Datensatz-Index 13 wird dem Slave-Modul 5e angezeigt, den 150 Byte umfassenden Default-Parameter-Datensatz 11 vom Speicher 10 in den Parameterspeicher 14 zu übertragen. Dadurch, dass die Größe des Bereichs Be lediglich 2 Byte ist, können 227 Byte als freier Bereich Bx2 im Telegramm Pr2 zur Parametrierung weiterer Slave-Module genutzt werden.
Selbstverständlich können die Slave-Module 5b, 5c entsprechend dem Slave-Modul 5e ausgebildet sein, wobei in diesem Fall ebenfalls lediglich 2 Byte - jeweils 1 Byte für eine Slot-Nummer und einen Datensatz-Index - für die Bereiche Bb, Bc im Telegramm erforderlich sind und wobei ferner die Slave-Module 5b, 5c jeweils einen Default-Parameter-Datensatz mit einer Länge bzw. Größe von 8 Byte aufweisen.

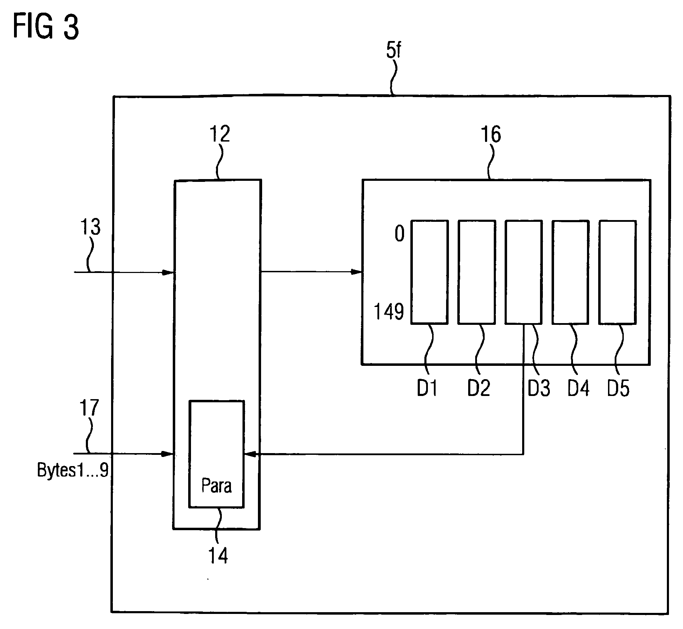

Es kann vorkommen, dass ein Slave-Modul je nach Betriebsart und Funktionalität vielfältig konfiguriert werden kann. Um unterschiedliche Konfigurationen mittels der Parameter einstellen zu können, weist in diesem Fall das Slave-Modul mehrere Default-Parameter-Datensätze auf, auf die wiederum mittels eines Datensatz-Index referenziert wird. Im vorliegenden Ausführungsbeispiel sind für ein Slave-Modul 5f (Figur 3) fünf Default-Parameter-Datensätze D1 bis D5 gleicher Datenstruktur bzw. gleichen Formats vorgesehen, die in einem Speicher 16 des Slave-Moduls 5f hinterlegt sind. Auf jeden dieser jeweils 150 Byte umfassenden Default-Parameter-Datensätze D1 bis D5 wird wiederum mittels des Datensatz-Index 13 zugegriffen. Der Datensatz-Index 13, beispielsweise ein Index "3" bewirkt, dass der Controller 12 den Default-Parameter-Datensatz D3 in den Parameterspeicher 14 einträgt.

Es kann ferner vorkommen, dass einige in einem Default-Parameter-Datensatz hinterlegte Parameter häufig geändert werden müssen, allerdings auf die Hinterlegung einer Vielzahl von Default-Parameter-Datensätzen für die unterschiedlichen Parameter-Konfigurationen bzw. -einstellungen in einem Slave-Modul verzichtet werden soll. Um die Anzahl der in diesem Slave-Modul hinterlegten Default-Parameter-Datensätze zu beschränken, ist daher vorgesehen, auf häufig zu ändernde Parameter in einem Default-Parameter-Datensatz zugreifen und diese einfach ändern zu können.

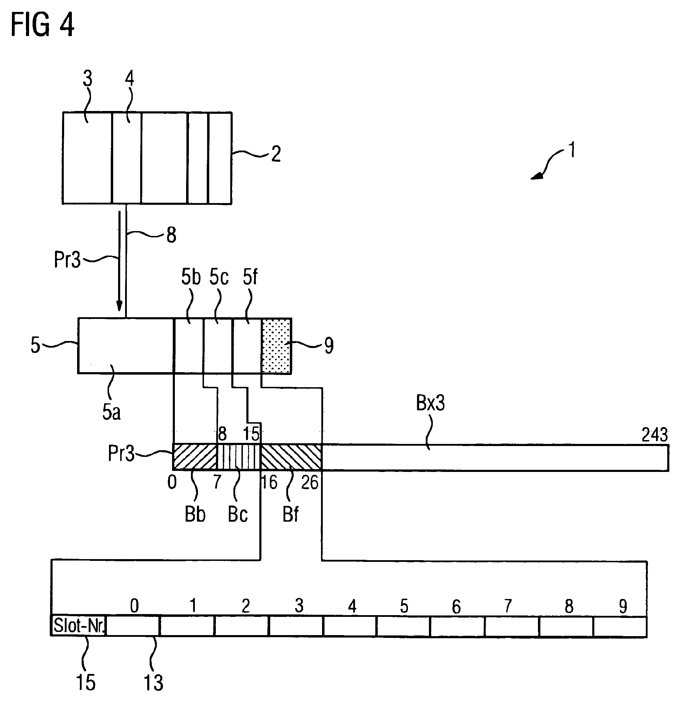

Es wird im Folgenden angenommen, dass häufig zu ändernde Parameter im Default-Parameter-Datensatz D3 (Figur 3) in den Bytes 1 bis 9 hinterlegt sind. Auf diese 9 Bytes wird zugegriffen, indem in einem Parameter-Telegramm Pr3 in einem dem Slave-Modul 5f zugeordneten Bereich Bf weitere 9 Bytes 1 bis 9 reserviert sind, in denen die neuen Parameter hinterlegt sind (Figur 4). In diesem Fall adressiert das Interface-Modul 5a mittels der Slot-Nummer 15 das Slave-Modul 5f, mittels des Datensatzindex 13 den Default-Parameter-Datensatz D3, aufgrund dessen dieser Default-Parameter-Datensatz D3 in den Parameterspeicher 14 geladen wird, wobei aufgrund der neuen in den Bytes 1 bis 9 hinterlegten Parameter die in den Parameterspeicher 14 geladenen Parameter in den Bytes, welche diesen Bytes 1 bis 9 entsprechen oder zugeordnet sind, überschrieben werden, was in der Figur 3 mittels eines Bezugszeichens 17 angedeutet ist. Mittels derartiger Maßnahmen verringert sich - wie beschrieben - die Anzahl der zu hinterlegenden Default-Parameter-Datensätze im Speicher 16 des Slave-Moduls 5f, allerdings verkleinert sich auch ein freier Bereich Bx3 im Parameter-Telegramm Pr3, da in diesem zusätzliche Bytes 1 bis 9 zu reservieren bzw. vorzugeben sind, um Änderungen im referenzierten Default-Parameter-Datensatz D3 zu bewerkstelligen.

## Patentansprüche

1. Automatisierungseinrichtung mit einer Slave-Einheit (5) und mit einem Master-Modul (4), das über einen Bus (8) mit einem IM-Modul (5a) der Slave-Einheit (5) verbunden ist, die mehrere Slave-Module (5b,... ) aufweist, die mittels eines von dem Master-Modul (4) dem IM-Modul (5a) übermittelten Telegramms (Pr2, Pr3) parametrierbar sind, wobei das Telegramm (Pr2, Pr3) für jedes Slave-Modul (5b,... ) zu dessen Parametrierung einen Datenbereich (Bb, Bc, ... ) aufweist, **dadurch gekennzeichnet, dass** mindestens eines der Slave-Module (5e, 5f) mehrere Default-Datensätze (11, D1, ... ) aufweist, wobei für jeden dieser Default-Datensätze (11, D1, ... ) jeweils ein Datensatz-Index (13) vorgesehen ist, und dass mittels des im Datenbereich (Bb, Bc, ... ) des Telegramms (Pr2, Pr3) hinterlegten Datensatz-Index (13) das mindestens eine Slave-Modul (5e, 5f) zu dessen Parametrierung auf den entsprechenden in diesem mindestens einen Slave-Modul (5e, 5f) hinterlegten Default-Datensatz (11, D1, ...) zugreift.

2. Automatisierungseinrichtung nach Anspruch 1, **dadurch gekennzeichnet, dass** vorgesehene Änderungen von Parametern an den Default-Datensätzen (11, D1, ... ) ebenfalls in dem für das mindestens eine Slave-Modul (5e, 5f) vorgesehenen Datenbereich (Bb, Bc, ... ) des Telegramms (Pr2, Pr3) hinterlegt sind.

## Claims

1. Automation device having a slave unit (5) and having a master module (4) which is connected via a bus (8) to an IM module (5a) of the slave unit (5) having a plurality of slave modules (5a, ...) which can be parameterized using a message (Pr2, Pr3) transmitted to the IM module (5a) by the master module (4), the message (Pr2, Pr3) having a data area (Bb, Bc, ...) for each slave module (5b, ...) for its parameterization, **characterized in that** at least one of the slave modules (5e, 5f) has a plurality of default data records (11, D1, ...), a data record index (13) respectively being provided for each of these default data records (11, D1 ...), and **in that** the data record index (13) stored in the data area (Bb, Bc, ...) of the message (Pr2, Pr3) is used by the at least one slave module (5e, 5f) to access the corresponding default data record (11, D1, ...) stored in this at least one slave module (5e, 5f) for the purpose of its parameterization.

2. Automation device according to Claim 1, **characterized in that** envisaged changes of parameters in the default data records (11, D1, ...) are likewise stored **in that** data area (Bb, Bc, ...) of the message (Pr2, Pr3) which is provided for the at least one slave module (5e, 5f).

## Revendications

1. Dispositif d'automatisation ayant une unité (5) esclave et un module (4) maître qui est relié par l'intermédiaire d'un bus (8) à un module IM (5a) de l'unité (5) esclave, laquelle a plusieurs modules (5b)... esclaves qui peuvent être paramétrés à l'aide d'un télégramme (Pr2, Pr3) transmis par le module (4) maître au module IM (5a), le télégramme (Pr2, Pr3) ayant pour chaque module (5b) .... esclave en vue de sa paramétrisation une partie (Bb, bc,.... ) de données, **caractérisé en ce qu'**au moins l'un des modules (5e, 5f) esclaves a plusieurs jeux (11, D1, ... ) de données de défaut, un index (13) de jeu de données étant prévu respectivement pour chacun de ces jeux (11, D1,...) de données de défaut et **en ce que**, à l'aide de l'index (13) de jeu de données mémorisé dans la partie (Bb, Bc, ....) de données du télégramme (Pr2, Pr3), le au moins un module (5e, 5f) esclave accède pour sa paramétrisation au jeu (11, D1,....) de données de défaut correspondant mémorisé dans ce au moins un module (5e, 5f) esclave.

2. Dispositif d'automatisation suivant la revendication 1, **caractérisé en ce que** des modifications prévues de paramètres des jeux (11, D1, ...) de données de défaut sont mémorisées également dans la partie (Bb, Bc, ...) du télégramme (Pr2, Pr3) prévue pour le au moins un module (5e, 5f) esclave.
